# EUROPEAN PATENT SPECIFICATION

(11) **EP 2 310 628 B1**
(45) Date of publication and mention of the grant of the patent: **27.08.2014**
(21) Application number: 09770723.6
(22) Date of filing: 10.06.2009
(51) Int. Cl.: G01V 3/28, E21B 47/09

(54) **DETECTING A STRUCTURE IN A WELL**
ERKENNUNG EINER STRUKTUR IN EINEM BOHRLOCH
DETECTION D'UNE STRUCTURE DANS UN PUITS

(30) Priority: 26.06.2008 US 75913 P
(43) Date of publication of application: 20.04.2011
(73) Proprietor: Schlumberger Technology B.V., 2514 JG The Hague (NL); PRAD Research And Development Limited, Road Town, Tortola (VG); Services Pétroliers Schlumberger, 75007 Paris (FR); Schlumberger Holdings Limited, Roadtown, Tortola (VG)
(72) Inventor: ZHANG, Hong, El Sobrante CA 94803 (US); DEPAVIA, Luis, E., Sugar Land, Texas 77478 (US)
(74) Representative: Hyden, Martin Douglas
(86) International application number: PCT/US2009/046818
(87) International publication number: WO 2009/158189

(56) References cited:
- EP-A1- 1 795 920
- WO-A2-2009/045938
- US-A1- 2006 254 768
- US-B1- 6 597 178

## Description

### BACKGROUND

Geological formations forming a reservoir for the accumulation of hydrocarbons or other fluids in the subsurface of the earth contain a network of interconnected paths in which fluids are disposed whereby the fluids may ingress or egress from the reservoir. To determine the behavior of the fluids in this network, knowledge of both the porosity and permeability of the geological formations is desired. From this information, efficient development and management of hydrocarbon reservoirs may be achieved. For example, the resistivity of geological formations is a function of both porosity and permeability. Considering that hydrocarbons are electrically insulating and most water contain salts, which are highly conductive, resistivity measurements are a valuable tool in determining the presence of a hydrocarbon reservoir in the formations.

One technique to measure formation resistivity involves the use of electromagnetic induction via transmitters of low frequency magnetic fields that induce electrical currents in the formation. These induced electrical currents in turn produce secondary magnetic fields that can be measured by a magnetic field receiver. EP1795920 discloses an electromagnetic imaging method for electromagnetically measuring physical parameters of a pipe by means of a measuring arrangement comprising a plurality of transmitter coils and a plurality of receiver coils, the transmitter coils and receiver coils being associated so as to form the plurality of measuring arrangements being adapted to be positioned into the pipe and displaced through the pipe. US6597178 discloses a magnetic receiver with a magnetically permeable core positioned inside a wellbore casing and operated in a feedback mode to reduce attenuation of a measurable magnetic field.

The performance of a magnetic field receiver positioned within a wellbore may be disrupted by the presence of certain electrically conductive and/or magnetic structures such as parts of the well casing assembly, such as casing collars or casing centralizers, patches, or perforated casing segments. Casing collars are used to connect different sections of a casing, while casing centralizers are used to generally center the casing within a well. Distortion of the magnetic field detected by a magnetic field receiver due to the presence of such structures may cause inaccurate results to be obtained from the electromagnetic induction survey data.

### SUMMARY

The present disclosure relates generally to detecting a structure within a well casing assembly in a well. The present disclosure also relates to a method to minimize casing imprints on induction survey data and improve the resolution of the inversion images and results for electromagnetic induction survey, such as cross-well, surface to borehole, and single-well EM surveys.

In general, according to an example, a tool for detecting a structure in a well includes a receiver coil having a first winding (main winding) and a second winding (feedback winding) wound on a magnetic core, and a circuit to apply an input signal to the second winding. The tool further includes a detection circuit to detect a response of the first winding to the input signal applied to the second winding, or the trans-impedance between the feedback winding and the main winding, where the response of the first winding indicates the presence of the structure in the well if the receiver coil is positioned proximate to the structure.

Other or alternative features will become apparent from the following description, from the drawings, and from the claims.

### BRIEF DESCRIPTION OF THE DRAWINGS

Figs. 1 is a schematic diagram of an illustrative arrangement that includes a tool according to an embodiment of the invention;
Fig. 2 is a schematic diagram of components in the tool for detecting electrically conductive and/or magnetic structures within a well casing assembly in a well, according to an embodiment;
Fig. 3 is a flow diagram of a process of detecting a structure within a well casing assembly in a well using a tool according to an embodiment;
Fig. 4 is a schematic diagram of an illustrative arrangement that includes a tool having receivers, where the tool is positioned to avoid interference by electrically conductive and/or magnetic structures within a well casing assembly in a well, according to an embodiment; and
Fig. 5 is an example of CCID log in a well, 5A showing a Receiver CCID log in Cr steel cased well section, and 5B showing a Receiver CCID log in Carbon steel cased well section

### DETAILED DESCRIPTION

In the following description, numerous details are set forth to provide an understanding of the present invention. However, it will be understood by those skilled in the art that the present invention may be practiced without these details and that numerous variations or modifications from the described embodiments are possible.

As used here, the terms "above" and "below"; "up" and "down"; "upper" and "lower"; "upwardly" and "downwardly"; and other like terms indicating relative positions above or below a given point or element are used in this description to more clearly describe some embodiments of the invention. However, when applied to equipment and methods for use in wells that are deviated or horizontal, such terms may refer to a left to right, right to left, or diagonal relationship as appropriate.

In accordance with some embodiments, a mechanism or technique is provided to allow for detection of structures within a well casing assembly in a well that may interfere with an electromagnetic (EM) induction survey used for acquiring information about a subterranean formation surrounding the well. The EM induction survey can comprise a cross-well survey, a surface-to-wellbore survey, or a single wellbore survey. To implement a cross-well survey, one or more EM transmitters are placed in a first wellbore, while one or more EM receivers are placed in a second wellbore to detect EM signals transmitted by the EM transmitter(s) and affected by the subterranean formation between the first and second wellbores. To implement a surface-to-wellbore survey, one or more EM transmitters are placed at or near the earth surface (*e.g*., land surface or sea floor) or towed in a body of water (marine), or towed in air above the surface (air-borne), and one or more EM receivers are placed in a wellbore to detect EM signals transmitted by the EM transmitter(s) and affected by the subterranean formation between the earth surface and the wellbore. To implement a single-wellbore survey, both EM transmitter(s) and EM receiver(s) are placed in the same wellbore. In the first two of the survey techniques discussed above, the EM transmitter is positioned relatively far away from the EM receiver, and in the third survey techniques (single well survey), the transmitter is placed away from the receivers such that receivers are in the far-field region of the transmitter, and thus, is considered a remote EM transmitter.

The structures within a well casing assembly in a well that can be detected using a mechanism or technique according to some embodiments include casing collars, casing centralizers, or any other electrically conductive and/or magnetic structure that can interfere with EM induction surveying. Electrically conductive and/or magnetic structures such as casing collars and casing centralizers add relatively strong imprints to cross-well, surface-to-wellbore, or single wellbore EM measurements made by an EM receiver positioned proximate such a structure. Typically, attempting to remove such imprints to obtain high-resolution images (through data inversion) of a surrounding subterranean formation is challenging. Therefore, receivers can be placed in the well positioned so as to avoid or limit effects from these structures during EM induction surveys.

In accordance with some embodiments, the mechanism or technique of detecting electrically conductive and/or magnetic structures within a well casing assembly in a well involves using a tool that has a detection mechanism that includes a receiver coil having both a main winding and a secondary winding (referred to herein as a "feedback" winding). The main winding and feedback winding are wound around a core, which can be a magnetic core or an air core. The detection mechanism according to some embodiments also includes an application circuit to apply an input signal to the feedback winding, and a detection circuit to detect a response of the main winding to the input signal applied to the feedback winding. The response of the main winding can be processed to identify the presence of an electrically conductive and/or magnetic structure proximate the receiver coil. If the receiver coil is positioned proximate an electrically conductive and/or magnetic structure, then the response of the main winding will indicate the presence of such structure. A receiver coil is considered to be "proximate" the electrically conductive and/or magnetic structure if the receiver coil is close enough such that the structure affects the electromagnetic behavior of the receiver coil.

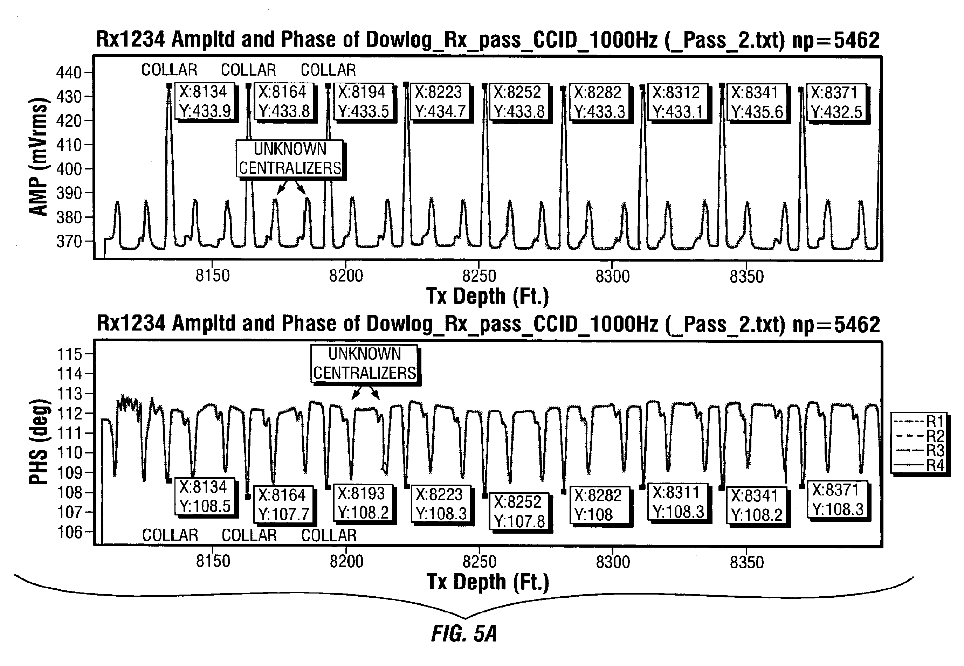

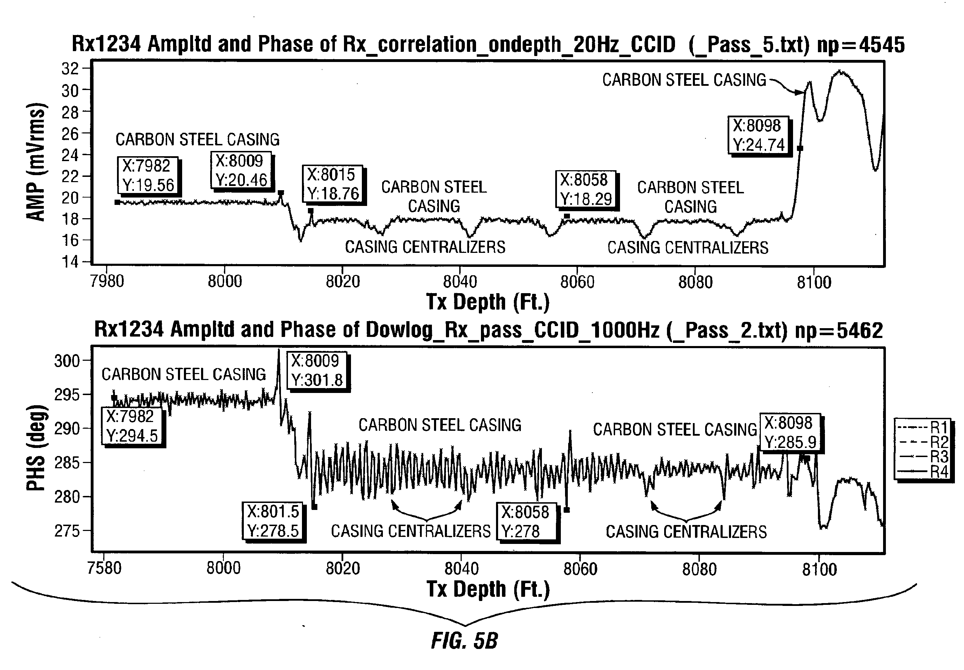

Note that the electrically conductive and/or magnetic structures that are detected by the detection mechanism according to some embodiments are structures in addition to any casing that may be present in the well. A "casing" refers to any structure that lines a wellbore. The casing provides a relatively smaller effect on EM measurements made by an EM receiver in the wellbore, as shown in Fig.5 as an example. The structures that are detected by the detection mechanism according to some embodiments are "intermittent" structures that are not continuously provided within sections of the wellbore. These intermittent electrically conductive and/or magnetic structures are distinguished from the casing that extends continuously along at least a portion of the wellbore.

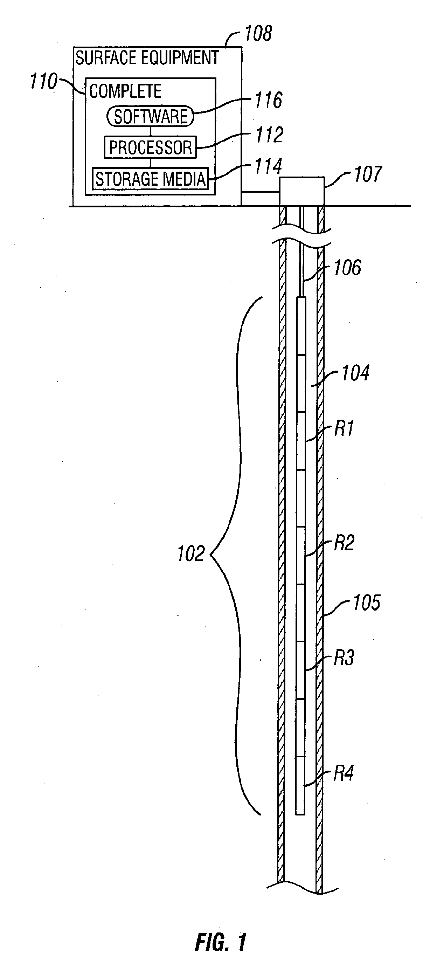

Fig. 1 illustrates a tool 102 that has been lowered into a wellbore 104 by a carrier structure 106. The carrier structure 106 can be a wireline, coiled tubing, or any other carrier structure that extends from a wellhead 107 of the wellbore 104. The carrier structure 106 includes a communications medium (e.g., electrical communications medium, optical communications medium, etc.) to allow for communication between the tool 102 and surface equipment 108.

The surface equipment 108 includes a computer 110 that has a processor 112 and storage media 114. Software 116 is executable on the processor to perform predefined tasks. In accordance with some embodiments, the software 116 can process measurement data received from the tool 102 to determine presence and locations of intermittent electrically conductive and/or magnetic structures within the well casing assembly in the wellbore 104 that can interfere with an EM induction survey.

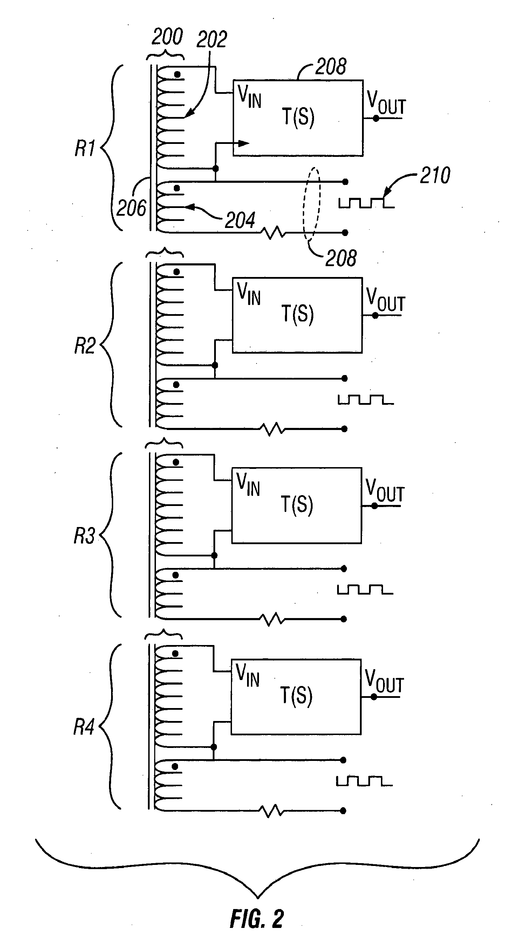

The measurement data that can be received by the computer 110 includes measurement data collected by receivers R1, R2, R3, and R4. Although four receivers are shown in Fig. 1, it is noted that in alternative implementations, different numbers of receivers can be employed, from one to more than one. One or more of the receivers R1-R4 include the detection mechanism according to some embodiments that can be used for detecting intermittent electrically conductive and/or magnetic structures in the within the well casing assembly in the wellbore 104. As shown in Fig. 2, each of the receivers R1-R4 includes the same detection mechanism. In other implementations, the detection mechanism can be omitted in some of the receivers R1-R4.

As shown in Fig. 2, such detection mechanism in each receiver includes a receiver coil 200 that has a main winding 202 and a feedback winding 204 both wound on the core 206. An application circuit 208 is used to apply an input signal 210 to the feedback winding 204. The application circuit 208 for applying the input signal 210 to the feedback winding 204 can be driven by a local signal generator provided in the tool 102. Alternatively, the application circuit 208 can include conductive lines that are driven by a signal generator provided in the surface equipment 108.

The input signal 210 provided to the feedback winding 204 induces a response in the main winding 202. The induced response includes an electrical voltage across the main winding 202 that can be detected by the detection circuit 208. The detection circuit 208 provides an output voltage Vₒᵤₜ that represents the response of the main winding 202 to the input signal 210 applied to the feedback winding 204.

The input signal 210 provided to the feedback winding 204 includes either an oscillating (periodic) signal having a predetermined frequency, or an input pulse that induces a transient response in the main winding 202.

If the input signal 210 is an oscillating signal having a predetermined frequency, then the response at the main winding 202 measured by the detection circuit 208 can be a first harmonic response. In accordance with some embodiments, the frequency of the input signal 210 can be varied, and the corresponding responses of the different frequencies can be measured.

The drive current (of the input signal 210) applied to the feedback winding 204 can also be monitored, such that the trans-impedance, i.e., the ratio between the measured voltage on the main winding 202 and the current in the feedback winding 204 can be measured.

When the receiver coil 200 is positioned proximate an intermittent electrically conductive and/or magnetic structure within the well casing assembly in the wellbore 104, the response of the receiver coil is different than the response of the receiver coil positioned at a larger distance away from the intermittent electrically conductive and/or magnetic structure. Different types of such intermittent structures, such as casing collars and casing centralizers, can cause different responses in the receiver coil 200. By measuring the responses of the receiver coil 200 at multiple different frequencies, it is possible to identify and distinguish between the different types of intermittent structures.

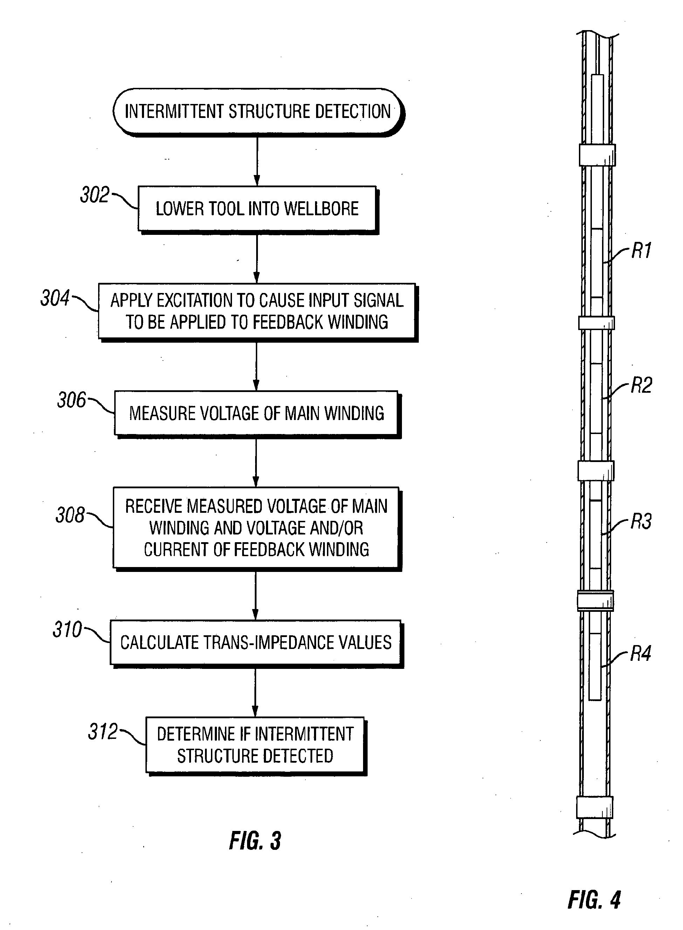

Fig. 3 shows a process of performing detection of intermittent electrically conductive and/or magnetic structures within the well casing assembly in the wellbore 104. A tool that includes a detection mechanism according to some embodiments is lowered (at 302) into the wellbore 104 (Fig. 1). As the tool is lowered in the wellbore 104, an excitation can be applied (at 304) to cause the input signal 210 (Fig. 2) to be applied to the feedback winding 204 of the receiver coil 200. The excitation that is applied can be produced at a local signal generator provided in the tool, or a signal generator located at the surface equipment 108 in Fig. 1.

If there are multiple detection mechanisms in the corresponding receivers (such as receivers R1-R4) in the tool, then the applied excitation input signal 210 is applied to each of the feedback windings in the corresponding detection mechanism.

The voltage across the main winding 202 (that is responsive to the input signal 210 applied to the feedback winding 204) is then measured (at 306). The computer 110 in the surface equipment 108 then receives (at 308) the measured voltage of the main winding of each receiver coil 200. The computer 110 further receives the voltage and/or current in the feedback winding 204 induced by the input signal 210. If there are multiple detection mechanisms, then multiple measured voltages and currents of main windings and feedback windings are received at the computer 110. Note that the applied excitation can cause the frequency of the input signal 210 provided to the feedback winding 204 of each detection mechanism to be varied, such that responses of the main winding of each detection mechanism at corresponding different frequencies are received.

Trans-impedance values are then calculated (at 310) based on the received measured voltages of the main winding(s) and the voltages and/or currents of the feedback winding(s). If the input signal 210 applied to a feedback winding 204 has been varied across multiple frequencies, then the trans-impedances at different frequencies can be determined. Based on the calculated trans-impedance values, the computer 110 determines (at 312) whether any intermittent electrically conductive and/or magnetic structure has been detected.

Note that the process including tasks 302-312 can be continually performed as the tool is lowered, or up-logged in the wellbore 104. The trans-impedance values are continually monitored to detect intermittent electrically conductive and/or magnetic structures. Once such an intermittent structure is detected, then the corresponding position of the intermittent structure can be recorded.

The procedure of Fig. 3 can be performed in the context of a depth log. Effectively, measurements at different depths of the tool are collected. The measurements are used to identify intermittent electrically conductive and/or magnetic structures in the wellbore. These identified intermittent structures can be provided in the depth log. Based on locations (depths) of the detected intermittent structures, a well-log operator can position the tool 102 of Fig. 1 such that receivers R1-R4 are positioned away from the intermittent electrically conductive and/or magnetic structures during survey measurements. Such an arrangement is shown in Fig. 4, where each receiver R1-R4 is positioned between a pair of intermittent structures (either casing collars or casing centralizers). In this manner, when the receivers R1-R4 are used to perform EM induction surveying, interference caused by the intermittent electrically conducted and/or magnetic structures with EM measurements collected by receivers R1-R4 can be avoided.

Embodiments of the invention can be performed in wellbores that are lined with either magnetic or non-magnetic casings. With magnetic casings, however, it is noted that the frequencies used for exciting the feedback windings should be set at lower frequencies.

The detection mechanism according to some embodiments can also be used to correlate depths of the tool in the wellbore. If the depths of casing collar locators and/or casing centralizers have been previously determined, then the detection mechanism can be used to detect presence of such casing collar locators and/or casing centralizers such that the depth of a tool including the detection mechanism can be determined.

As yet another embodiment, the detection mechanism can be used to detect sections of a casing that have abnormalities, detect missing casing sections (e.g., sections that have been removed), detect casing patches, or detect sections that have been perforated.

Tasks 308, 310 and 312 depicted in Fig. 3, along with tasks for determining a depth log and identifying locations of intermittent electrically conductive and/or magnetic structures, can be performed by the software 116 executed in the computer 110 shown in Fig. 1. Instructions of the software 116 are loaded for execution on a processor (such as processor 112 in Fig. 1). The processor includes microprocessors, microcontrollers, processor modules or subsystems (including one or more microprocessors or microcontrollers), or other control or computing devices. As used here, a "processor" can refer to a single component or to plural components (e.g., one CPU or multiple CPUs). Alternatively, various of the determining and location identifying steps could be performed by analogous software executed on a processor in a downhole tool.

Data and instructions (of the software) are stored in respective storage devices, which are implemented as one or more computer-readable or computer-usable storage media. The storage media include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact disks (CDs) or digital video disks (DVDs).

## Claims

1. A method of performing an electromagnetic induction survey comprising the following steps:
identifying a structure in a well lining assembly, comprising:
lowering a tool having a detection mechanism into the well (302), the detection mechanism having a receiver coil (200) with a first winding (202) and a second winding (204);
applying an excitation (304) to cause an input signal (210) to be applied to the second winding (204);
measuring a response (306) of the first winding (202) to the input signal (210) applied to the second winding (204);
determining, based on the response, whether the structure in a well lining assembly has been detected (312);
recording a depth of the structure in response to determining that the structure has been detected (312); and
repeating the applying (304), measuring (306), and determining (312) tasks as the tool is lowered, or up-logged to another depth location in the well, wherein the method determines whether another electrically conductive and/or magnetic structure is present in the another location in the well and records a depth of the another electrically conductive and/or magnetic structure;
wherein the method comprises positioning the tool such that a receiver in the tool is positioned away from one or more depth locations at which structures are present, wherein the receiver is to measure signals for performing an electromagnetic induction survey.

2. The method of claim 1, wherein the detection mechanism is part of the receiver.

3. The method of claim 1, further comprising determining a depth of the tool in the well based on detection of the electrically conductive and/or magnetic structure.

4. The method of claim 1, further comprising using the detection mechanism to detect one or more of the following: a casing section with an abnormality, a defect of a predetermined magnitude due to corrosion, a missing casing section, a casing patch, and a perforated casing section.

5. The method of claim 1, further comprising positioning the tool at a predetermined depth based on the determination of where the structure in a well lining assembly has been detected thereby minimizing casing imprints on a data set obtained by the tool.

6. The method according to claim 2, further comprising re-sampling an existing set of log data with the recorded depth of the structure to remove an imprint in the existing log data due to the structure detected at the recorded depth.

## Patentansprüche

1. Verfahren zum Durchführen einer elektromagnetischen Induktionsmessung, umfassend die folgenden Schritte:
Identifizieren einer Struktur in einer Bohrlochauskleidungseinheit;
Absenken eines Werkzeugs mit einem Erkennungsmechanismus in das Bohrloch (302), wobei der Erkennungsmechanismus eine Empfängerspule (200) mit einer ersten Wicklung (202) und einer zweiten Wicklung (204) aufweist;
Zuführen einer Erregung (304), um zu bewirken, dass ein Eingangssignal (210) der zweiten Wicklung (204) zugeführt wird;
Messen eines Ansprechverhaltens (306) der ersten Wicklung (202) auf das der zweiten Wicklung (204) zugeführte Eingangssignal (210);
Bestimmen auf der Basis des Ansprechverhaltens, ob die Struktur in einer Bohrlochauskleidungseinheit erkannt worden ist (312);
Aufzeichnen einer Tiefe der Struktur als Reaktion auf das Bestimmen, dass die Struktur erkannt worden ist (312); und
Wiederholen der Aufgaben des Zuführens (304), Messens (306) und Bestimmens (312), wenn das Werkzeug auf eine andere Tiefenposition in dem Bohrloch abgesenkt oder entsprechend protokolliert wird, wobei das Verfahren bestimmt, ob eine weitere elektrisch leitfähige und/oder magnetische Struktur an der anderen Position vorhanden ist, und wobei es eine Tiefe einer anderen elektrisch leitfähigen und/oder magnetischen Struktur aufzeichnet.;
wobei das Verfahren das Positionieren des Werkzeugs umfasst, so dass ein Empfänger in dem Werkzeug entfernt von einer oder mehreren Tiefenpositionen positioniert ist, an denen Strukturen vorhanden sind, wobei der Empfänger Signale zum Durchführen einer elektromagnetischen Induktionsmessung misst.

2. Verfahren nach Anspruch 1, wobei der Erkennungsmechanismus Teil des Empfängers ist.

3. Verfahren nach Anspruch 1, wobei dieses ferner das Bestimmen einer Tiefe des Werkzeugs in dem Bohrloch auf der Basis der Erkennung der elektrisch leitfähigen und/oder magnetischen Struktur umfasst.

4. Verfahren nach Anspruch 1, ferner umfassend den Einsatz des Erkennungsmechanismus zum Erkennen eines oder mehrerer der folgenden: eines Futterabschnitts mit einer Anomalität, eines durch Korrosion verursachten Fehlers vorbestimmter Größe, eine fehlenden Futterabschnitts, eines Futterausschnitts und eines perforierten Futterabschnitts.

5. Verfahren nach Anspruch 1, ferner umfassend das Positionieren des Werkzeugs auf einer vorbestimmten Tiefe nachdem bestimmt worden ist, wo die Struktur in einer Bohrlochauskleidung erkannt worden ist, wodurch Futtermarken in einem durch das Werkzeug erhaltenen Datensatz minimiert werden.

6. Verfahren nach Anspruch 2, ferner umfassend das neuerliche Abtasten eines bestehenden Protokolldatensatzes mit der aufgezeichneten Tiefe der Struktur, um eine Marke in den bestehenden Protokolldaten durch die auf der aufgezeichneten Tiefe erkannte Struktur zu entfernen.

## Revendications

1. Procédé de réalisation d'un relevé par induction électromagnétique, comprenant l'étape consistant à :
identifier une structure dans un ensemble revêtement de puits, comprenant les étapes consistant à :
descendre un outil ayant un mécanisme de détection dans le puits (302), le mécanisme de détection ayant une bobine réceptrice (200) avec un premier enroulement (202) et un second enroulement (204) ;
appliquer une excitation (304) pour amener un signal d'entrée (210) à être appliqué au second enroulement (204) ;
mesurer une réponse (306) du premier enroulement (202) au signal d'entrée (210) appliqué au second enroulement (204) ;
déterminer, en fonction de la réponse, si la structure dans un ensemble revêtement de puits a été détectée (312) ;
enregistrer une profondeur de la structure en réponse à la détermination de la détection (312) de la structure ; et
répéter les tâches d'application (304), de mesure (306), et de détermination (312) alors que l'outil est descendu, ou remonté à un autre emplacement de profondeur dans le puits, dans lequel le procédé détermine si une autre structure électriquement conductrice et/ou magnétique est présente dans l'autre emplacement dans le puits et enregistre une profondeur de l'autre structure électriquement conductrice et/ou magnétique ;
dans lequel le procédé comprend l'étape consistant à positionner l'outil de sorte qu'un récepteur dans l'outil soit positionné à distance d'au moins un emplacement de profondeur auquel des structures sont présentes, dans lequel le récepteur est destiné à mesurer des signaux pour réaliser un relevé par induction électromagnétique.

2. Procédé selon la revendication 1, dans lequel le mécanisme de détection fait partie du récepteur.

3. Procédé selon la revendication 1, comprenant en outre l'étape consistant à déterminer une profondeur de l'outil dans le puits en fonction de la détection de la structure électriquement conductrice et/ou magnétique.

4. Procédé selon la revendication 1, comprenant en outre l'étape consistant à utiliser le mécanisme de détection pour détecter au moins l'un des éléments suivants : une section de cuvelage avec une anomalie, un défaut d'une valeur prédéterminée dû à la corrosion, une section de cuvelage manquante, une pièce de cuvelage, et une section de cuvelage perforée.

5. Procédé selon la revendication 1, comprenant en outre l'étape consistant à positionner l'outil à une profondeur prédéterminée en fonction de la détermination de l'endroit où la structure dans un ensemble revêtement de puits a été détectée, minimisant ainsi les empreintes de cuvelage sur un ensemble de données obtenu par l'outil.

6. Procédé selon la revendication 2, comprenant en outre l'étape consistant à re-échantillonner un ensemble existant de données de journal avec la profondeur enregistrée de la structure pour supprimer une empreinte dans les données de journal existantes dues à la structure détectée à la profondeur enregistrée.
